# EUROPEAN PATENT APPLICATION

(11) **EP 4 686 630 A1**
(43) Date of publication of application: **04.02.2026**
(21) Application number: 25186362.7
(22) Date of filing: 30.06.2025
(51) Int. Cl.: B60W 40/08, B60K 28/06, B60W 30/18

(54) **DRIVER ASSISTANCE CONTROL DEVICE, DRIVER ASSISTANCE METHOD, AND COMPUTER PROGRAM**

(30) Priority: 31.07.2024 JP 2024124660
(71) Applicant: TOYOTA JIDOSHA KABUSHIKI KAISHA, Toyota-shi, Aichi-ken 471-8571 (JP)
(72) Inventor: TANAKA, Yusuke, TOYOTA-SHI, AICHI-KEN, 471-8571 (JP); FUKAYA, Motohiro, TOYOTA-SHI, AICHI-KEN, 471-8571 (JP); TOSHIMA, Kohei, TOYOTA-SHI, AICHI-KEN, 471-8571 (JP); MORIMOTO, Kazuhiro, TOYOTA-SHI, AICHI-KEN, 471-8571 (JP)
(74) Representative: Cabinet Beau de Loménie

(57) **Abstract**

A driver assistance control device (6) is configured so that if it is judged that a driver of the vehicle (100) is in an abnormal state where continued driving of the vehicle (100) would be difficult, it makes the vehicle (100) stop as driver assistance and so that at the time of the driver assistance, when the recognition level of dividing lines (L1, R1) of the current running lane on which the vehicle (100) is running is less than a predetermined level and the recognition level of a pair of left and right road dividing objects or road dividing lines (L2, R2) defining a road with a direction of forward movement on the road the same direction as the vehicle (100) is greater than or equal to the predetermined level, it makes the vehicle (100) stop between the pair of left and right road dividing objects or road dividing lines (L2, R2).

## Description

### FIELD

The present disclosure relates to a driver assistance control device, driver assistance method, and computer program.

### BACKGROUND

Japanese Unexamined Patent Publication No. 2021-109559 discloses a conventional running control device of a vehicle configured so that if it is judged that a driver is in an abnormal state losing his ability to drive the vehicle, it makes the host vehicle decelerate and holds the host vehicle in a stopping state as deceleration stop control. Specifically, when recognizing dividing lanes of a running lane in which a host vehicle is running (current running lane), this conventional running control device makes the host vehicle stop along dividing lines in the current running lane while makes the host vehicle stop along a running path of a front vehicle when not able to recognize dividing lines of the current running lane.

### SUMMARY

However, when not able to recognize both dividing lines of the current running lane and a front vehicle, this conventional running control device suspended the deceleration stop control.

The present disclosure was made focusing on such a problem and has as its object to enable deceleration stop control even when not recognizing both dividing lines of the current running lane and a front vehicle.

To solve the above problem, according to one aspect of the present disclosure, there is provided a driver assistance control device for a vehicle. The driver assistance control is configured so that if it is judged that a driver of the vehicle is in an abnormal state where continued driving of the vehicle would be difficult, it makes the vehicle stop as driver assistance and so that at the time of the driver assistance, when the recognition level of dividing lines of the current running lane on which the vehicle is running is less than a predetermined level and the recognition level of a pair of left and right road dividing objects or road dividing lines defining a road with a direction of forward movement on the road the same direction as the vehicle is greater than or equal to the predetermined level, it makes the vehicle stop between the pair of left and right road dividing objects or road dividing lines.

Further, according to another aspect of the present disclosure, there is provided a driver assistance method performed by a control device. The driver assistance method includes performing driver assistance making a vehicle stop if it is judged a driver of the vehicle is in an abnormal state in which continued driving of the vehicle would be difficult and making the vehicle stop between a pair of left and right road dividing objects or road dividing lines when, at the time of driver assistance, the recognition level of dividing lines of the current running lane on which the vehicle is running is less than a predetermined level and the recognition level of a pair of left and right road dividing objects or road dividing lines defining a road with a direction of forward movement on the road the same direction as the vehicle is greater than or equal to the predetermined level.

Further, according to another aspect of the present disclosure, there is provided a computer program. The computer program makes a computer perform processing including performing driver assistance making a vehicle stop if it is judged a driver of the vehicle is in an abnormal state in which continued driving of the vehicle would be difficult and making the vehicle stop between a pair of left and right road dividing objects or road dividing lines when, at the time of driver assistance, the recognition level of dividing lines of the current running lane on which the vehicle is running is less than a predetermined level and the recognition level of a pair of left and right road dividing objects or road dividing lines defining a road with a direction of forward movement on the road the same direction as the vehicle is greater than or equal to the predetermined level.

According to these aspects of the present disclosure, if the recognition level is low, including cases where dividing lines of a current running lane are not recognized, even if a front vehicle is not recognized, deceleration stop control can be performed so long as road dividing objects or road dividing lines can be recognized.

### BRIEF DESCRIPTION OF DRAWINGS

FIG. 1 is a schematic view of the configuration of a vehicle according to a first embodiment of the present disclosure.
FIG. 2 is a view showing one example of dividing lines of a current running lane and road dividing lines.
FIG. 3 is a flow chart explaining deceleration stop control according to the first embodiment of the present disclosure.

### DESCRIPTION OF EMBODIMENTS

Below, referring to the drawings, embodiments of the present disclosure will be explained in detail. Note that, in the following explanation, similar component elements will be assigned the same reference notations.

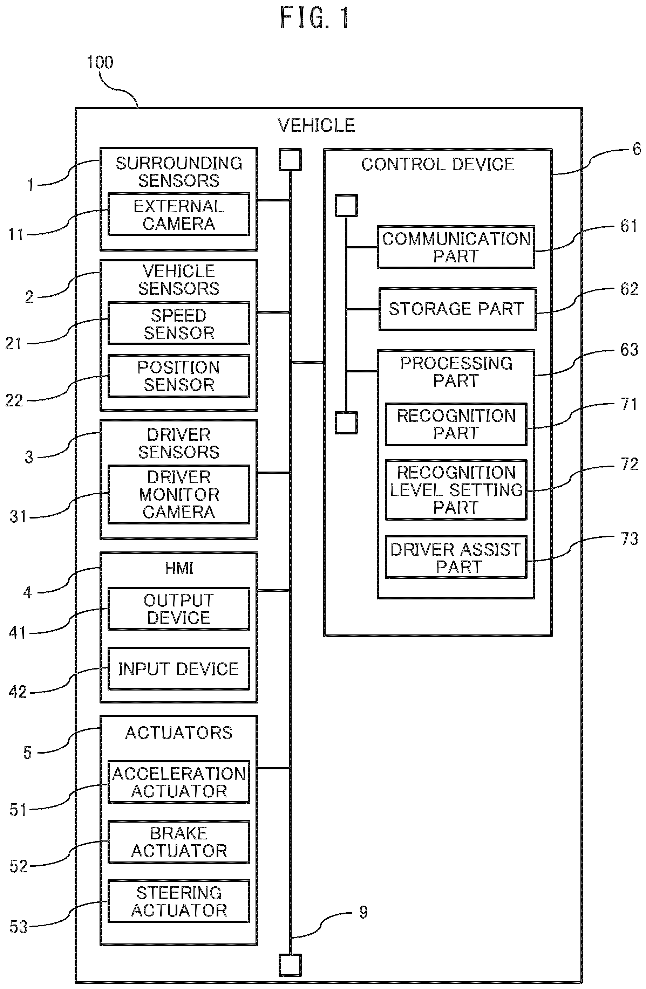

FIG. 1 is a schematic view of the configuration of a vehicle 100 according to one embodiment of the present disclosure.

The vehicle 100 is provided with surrounding sensors 1, vehicle sensors 2, driver sensors 3, an HMI (human machine interface) 4, an actuator 5, and a control device 6. The surrounding sensors 1, vehicle sensors 2, driver sensors 3, HMI 4, actuators 5, and the control device 6 are connected to be able to communicate through an internal vehicle network 9 based on a standard such as a Control Area Network.

The surrounding sensors 1 are sensors for generating surrounding data showing the situation in the surroundings of the vehicle 100. In the present embodiment, as the surrounding sensors 1, one or more external cameras 11 for capturing the surroundings of the vehicle 100 including the area in front of the vehicle 100 are provided. The external cameras 11 capture the surroundings of the vehicle 100 by a predetermined frame rate (for example, 10Hz to 40Hz) and generate surrounding images showing the surroundings of the vehicle 100. The external cameras 11 send the generated surrounding images as surrounding data to the control device 6 each time generating the surrounding images.

Note that, in addition to the external cameras 11, a distance measuring sensor for measuring the distance to a vehicle, pedestrian, or other object present in the surroundings of the vehicle 100 may be provided as a surrounding sensor 1. As examples of distance measuring sensors, for example, a lidar (light detection and ranging) device emitting laser light and measuring a distance based on the reflected light, a millimeter wave radar sensor emitting an electrical wave and measuring a distance based on its reflected wave, etc. may be mentioned.

The vehicle sensors 2 are sensors for generating vehicle data showing the state of the vehicle 100. In the present embodiment, as the vehicle sensors 2, for example, a speed sensor 21 for generating speed data showing the running speed of the vehicle 100, a position measuring sensor 22 for generating a latitude and longitude or other current position data showing a current position of the vehicle 100, etc. are provided. However, the vehicle sensors 2 are not limited to these sensors. The data acquired by the vehicle sensors 2 is sent as vehicle data to the control device 6.

The driver sensor 3 is a sensor for generating driver data showing the state of the driver. In the present embodiment, as the driver sensor 3, a driver monitor camera 31 for capturing the appearance of the driver including the face of the driver is provided. The driver monitor camera 31 captures the appearance of the driver by a predetermined frame rate (for example, 10 Hz to 40 Hz) and generates appearance image showing the appearance of the driver. Each time the driver monitor camera 31 generates an appearance image of the driver, it sends the generated appearance image as driver data to the control device 6.

The HMI 4 is a user interface for transfer of information between the vehicle 100 and its occupants. The HMI 4 is provided with output devices 41 for providing notifications to the vehicle occupants through the physical senses (for example, sight, hearing, touch, etc.) of the vehicle occupants and input devices 42 for the vehicle occupants to perform input operations and response operations. In the present embodiment, as output devices 41, a display (for example, meter display, center display, heads-up display, etc.) and speakers are provided. As the input devices 42, a touch panel and microphone are provided.

The HMI 4 displays information (for example, text information or graphic information) corresponding to a display signal received from the control device 6 on the display and outputs audio corresponding to an audio signal from the speakers. Further, the HMI 4 sends data input by the touch panel or input by voice by the vehicle occupant through the input devices 42 to the control device 6.

The HMI 4 may be mounted in the vehicle 100 in advance or may be a smartphone or other terminal held by a vehicle occupant. In the latter case, for example, information may be transferred by short distance wireless between the vehicle 100 and terminal of the vehicle occupant, the terminal of the vehicle occupant and an outside server (not shown) may communicate with each other, and information may be transferred indirectly through the server.

The actuators 5 are devices used for controlling operations of the vehicle 100. In the present embodiment, as the actuators 5, acceleration actuators 51 for controlling acceleration of the vehicle 100 (for example, at least one of the engine and motor), brake actuators 52 for controlling braking of the vehicle 100 (for example, a hydraulic actuator), and steering actuators 53 for controlling steering of the vehicle 100 (for example, a steering motor) are provided.

The control device 6 is an ECU (electronic control unit) provided with a communication part 61, storage part 62, and processing part 63.

The communication part 61 has a communicate interface circuit for connecting the control device 6 to the internal vehicle network 9. The communication part 61 supplies the various data received from the sensors 1to 3 and the HMI 4, etc. to the processing part 63. Further, the communication part 61 outputs the various signals output from the processing part 63 to the HMI 4 and the actuators 5, etc.

The storage part 62 has an HDD (hard disk drive), SSD (solid state drive), semiconductor memory, or other storage medium and stores various computer programs and data etc. used for processing at the processing part 63.

The processing part 63 has one or more CPUs (central processing units) and their peripheral circuits and runs various computer programs stored in the storage part 62. The processing part 63 is for examples a processor. The processor may further have other processing circuits such as a logical operation unit, numerical operation unit, or graphic processing unit. The processing part 63 performs processing according to a computer program to thereby function as a recognition part 71, recognition level setting part 72, and driver assistance part 73 and operates as function parts (modules) for realizing predetermined functions. In the following explanation, if explaining processing focused on the functions 71 to 73, this shows that the processing part 63 is running a program for realizing the function parts 71 to 73.

Below, the contents of the specific processing performed at the control device 6 will be explained. That is, the contents of the modules 71 to 73 realized by the processing part 63 running processing according to computer programs will be explained.

The recognition part 71 recognizes the objects and features in the surroundings of the vehicle 100. The recognition part 71, for example, successively inputs surrounding images received from the external camera 11 into a classifier to thereby recognize another vehicle, motorcycle, pedestrian, or other object in the surrounding images and a curb or fence or other object similar to this (below, referred to as a "sectioning object") or a road marking (for example, a dividing line defining a driving lane etc.) and other features. The classifier, for example, can be made a convolutional neural network (CNN) having a plurality of convolutional layers connected in series from the input side toward the output side. Further, the recognition part 71, for example, uses standard sizes of objects and features stored in the storage part 62 for each type of the objects and features and sizes of objects and features recognized in the surrounding image to calculate the distances from the host vehicle to the objects and features and calculate the positions of the objects and features.

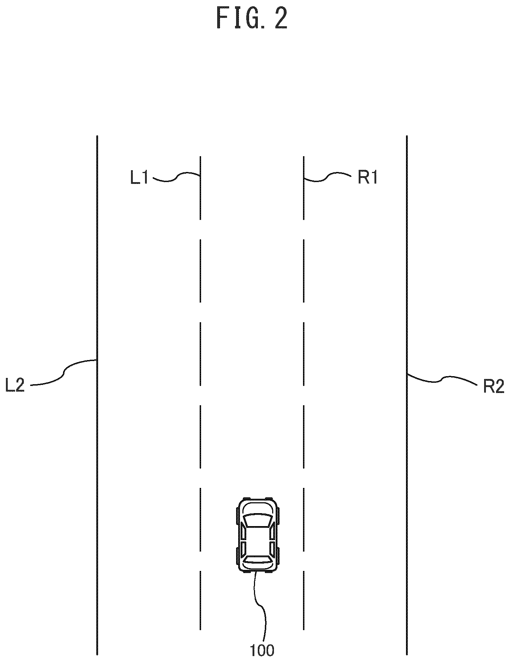

The recognition level setting part 72 sets the level of reliability (below, referred to as the "recognition level") of the results of recognition of the dividing objects and dividing lines on a road. In the present embodiment, the recognition level setting part 72 sets a recognition level of the pair of left and right dividing lines (below, referred to as the "dividing lines of the current running lane") defining a running lane (below, referred to as the "current running lane") in which the vehicle 100 is running and the recognition level of the pair of left and right dividing objects or dividing lines (below, referred to as the "road dividing objects or road dividing lines") defining a road with a direction of forward movement the same as the vehicle 100. For example, if the vehicle 100 is running in a three-lane per side road such as shown in FIG. 2, the dividing lines L1 and R1 are the dividing lines of the current running lane while the dividing lines L2 and R2 are the road dividing lines.

In the present embodiment, the recognition level setting part 72 sets the recognition level of the dividing lines of the current running lane to the minimum level of the level 0 if not being able to recognize the two left and right dividing lines of the current running lane, sets the recognition level of the current running lane to the level 1 if able to recognize one of the left and right dividing lines of the host vehicle, and sets the recognition level of the current running lane to the level 2 if able to recognize the two left and right dividing lines of the host vehicle. Further, the recognition level setting part 72 sets the recognition level of the road dividing objects or road dividing lines to the level 1 if able to recognize both of the left and right dividing objects or road dividing lines. In other cases, it sets the level 0.

Note that, as causes for why dividing lines cannot be recognized, for example, worn out or rubbed out dividing lines due to deterioration of the dividing lines, the effects of reflection of sunlight etc. from the road surface, etc. may be mentioned. Further, the method of setting the recognition level is not limited to the above method. Further finer recognition levels can be set.

For example, even if able to recognize the two left and right dividing lines of the vehicle 100, when the difference between the distance in the vehicle width direction from the center of gravity of the vehicle 100 to the recognized right side dividing line and the distance in the vehicle width direction from the center of gravity of the vehicle 100 to the left side dividing line is greater than or equal to a predetermined value, there is a possibility of one of the dividing lines being mistakenly recognized. For this reason, at such a time, the recognition level of the dividing lines of the current running lane may, for example, be set to 1.5 etc. in the above-mentioned example and then lowered. Further, if the distance in the vehicle width direction from the center of gravity of the vehicle 100 to a recognized dividing line is greater than or equal to a predetermined distance even if one of the left and right dividing lines of the host vehicle can be recognized, there is a possibility of the dividing lines being mistakenly recognized. Therefore, at such a time as well, the recognition level of the dividing lines of the current running lane may, for example, be set to 0.5 etc. in the above-mentioned example and then lowered.

The driver assistance part 73 controls the actuators 5 and performs driver assistance accompanied with driving control of the vehicle 100 based on the objects and features recognized by the recognition part 71. In the present embodiment, the driver assistance part 73 can perform driver assistance accompanied with driving control of the vehicle 100 by level 3 of a driving control level defined by the SAE (Society of Automotive Engineers), that is, a driving control level not requiring operations of the actuators 51 to 53 by the driver and monitoring of the surroundings. Further, the driver assistance part 73 can perform driver assistance accompanied with driving control of the vehicle 100 by a driving control level in which the driver is involved in driving the vehicle 100, for example, level 1 or level 2 of a driving control level defined by the SAE.

As one type of driver assistance accompanied with driving control of the vehicle 100, when, for example, due to a sudden change in physical condition etc., the driver has fallen in an abnormal state where continued driving of the vehicle 100 would be difficult, the driver assistance part 73 performs deceleration stop control making the vehicle 100 decelerate and holding the vehicle 100 in the stopped state.

Here, when performing deceleration stop control, to keep risk accompanying performing deceleration stop control (for example, risk of contact with a road user outside the vehicle etc.) from occurring, it is desirable to make the vehicle 100 decelerate and hold the vehicle 100 in a stopped state so as to prevent the vehicle 100 from departing from the roadway (part of road divided by curb or fence or other object similar to this or road marking for use for passage of the vehicle).

For this reason, in the past, if recognizing dividing lines of a current running lane, the practice had been to make the vehicle 100 decelerate along the dividing lines of the current running lane and hold the vehicle 100 in the stopped state while if not recognizing dividing lines of the current running lane, the practice had been to make the vehicle 100 decelerate along the path of the front vehicle and hold the vehicle 100 in the stopped state. However, in the past, if not recognizing the dividing lines of the current running lane, when there was no front vehicle present, the deceleration stop control was suspended.

Therefore, in the present embodiment, when performing deceleration stop control, when the recognition level of the dividing lines of the current running lane is less than a certain level and the recognition level of the road dividing objects or road dividing lines is greater than or equal to a certain level, the practice had been to make the vehicle 100 decelerate between the left and right road dividing objects or road dividing lines and hold the vehicle 100 in the stopped state. Due to this, if the recognition level is low, including cases where dividing lines of a current running lane are not recognized, even if there is no front vehicle present, so long as able to recognize road dividing objects or road dividing lines, it is possible to make the vehicle 100 decelerate and hold the vehicle 100 in a stopped state between the left and right road dividing objects or road dividing lines without suspending deceleration stop control.

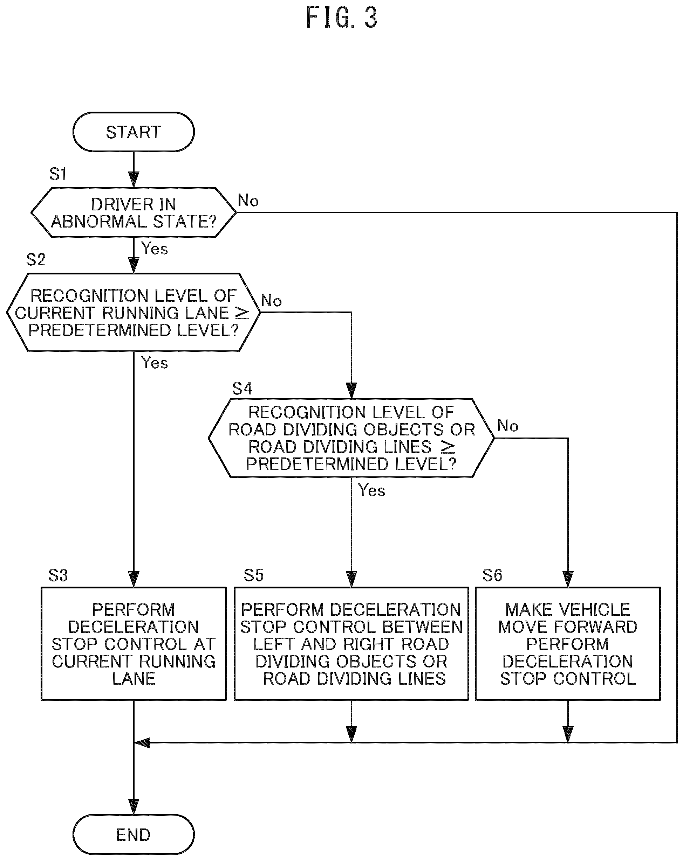

FIG. 3 is a flow chart explaining deceleration stop control according to the present embodiment.

At step S1, the control device 6 judges if the driver has fallen into an abnormal state where continued driving would be difficult (below, simply "abnormal state"). In the present embodiment, the control device 6 judges that the driver has fallen into an abnormal state if a predetermined presumed abnormal state continues for a predetermined time T1. If the driver has fallen in an abnormal state, the control device 6 proceeds to the processing of step S2. On the other hand, if the driver has not fallen in an abnormal state, the control device 6 ends the current processing.

A "presumed abnormal state" is a state where it is deemed that a driver has fallen in an abnormal state. As a presumed abnormal state, for example, mention can be made of a state where driver assistance accompanied with driving control of the vehicle 100 by less than or equal to the level 2 of driving control level is being performed yet the driver is not performing an operation to steer the steering wheel. Whether the driver is performing an operation to steer the steering wheel can, for example, be judged based on the magnitude of the steering torque acting on the steering shaft rotating along with the steering wheel. Further, it is also possible to judge whether the driver is in a presumed abnormal state regardless of the driving control level based on, for example, the image of a driver monitor camera.

Note that, in the present embodiment, when a presumed abnormal state has continued for a predetermined time T0 (T0 being a shorter time than T1), a warning starts to be given to the driver through the HMI. Due to this, deceleration stop control can be performed only when a driver has fallen in an abnormal state where he cannot respond to a warning. Further, whether the driver has fallen in an abnormal state may be judged using another control device and the results of judgment acquired.

At step S2, the control device 6 judges if the recognition level of the dividing lines of the current running lane is greater than or equal to a predetermined level (for example, level 1). If the recognition level of the dividing lines of the current running lane is greater than or equal to a predetermined level, the control device 6 proceeds to the processing of step S3. On the other hand, if the recognition level of the dividing lines of the current running lane is less than a predetermined level, the control device 6 proceeds to the processing of step S4..

At step S3, the control device 6 makes the vehicle 100 decelerate in the current running lane and makes the vehicle 100 stop in the current running lane.

At step S4, the control device 6 judges whether the recognition level of the road dividing objects or road dividing lines is greater or equal to a predetermined level (for example, level 1). If the recognition level of the road dividing objects or road dividing lines is greater than or equal to a predetermined level, the control device 6 proceeds to the processing of step S5. On the other hand, if the recognition level of the road dividing objects or road dividing lines is less than a predetermined level, the control device 6 proceeds to the processing of step S6.

At step S5, the control device 6 makes the vehicle 100 decelerate between the left and right road dividing lines and makes the vehicle 100 stop in the road. In making the vehicle 100 decelerate between the left and right road dividing lines, for example, so long as the vehicle 100 does not stick out from the left and right road dividing lines, the vehicle 100 may be made to proceed forward while making the vehicle 100 decelerate and the vehicle 100 may be made to decelerate along the left or right road dividing line. At this time, for example, by making the vehicle 100 decelerate and making it stop along the left road dividing line near the sidewalk, it is possible to easily and safely provide assistance from the sidewalk side to the driver after making the vehicle 100 stop. Further, conversely, by making the vehicle 100 decelerate and make it stop along the right road dividing line at the side far from the sidewalk, it is possible to prevent unintended contact with road users on the sidewalk or motorcycles etc. slipping pass the vehicle 100 at the left side of the road.

At step S6, the control device 6 makes the vehicle 100 simply proceed forward while making the vehicle 100 decelerate and making the vehicle 100 stop since the recognition level of the current running lane and the recognition level of road dividing objects or road dividing lines are less than predetermined levels and therefore any of the dividing lines, road dividing objects, and road dividing lines cannot be recognized or it is believed there is a relatively high possibility of these being mistakenly recognized.

The control device 6 of the vehicle 100 (driver assistance control device) according to the present embodiment explained above is configured so as to perform driver assistance making the vehicle 100 stop if it is judged that the driver of the vehicle 100 is in an abnormal state where continued driving of the vehicle 100 would be difficult and, at the time of that driving assist, to make the vehicle 100 stop between the pair of left and right road dividing objects or road dividing lines when the recognition level of the dividing lines of the current running lane in which the vehicle 100 is running is less than a predetermined level and the recognition level of the pair of left and right road dividing objects or road dividing lines defining a road with a direction of forward movement on the road the same as the vehicle 100 is greater than or equal to the predetermined level.

Due to this, if the recognition level is low, including cases where dividing lines of a current running lane are not recognized, even if a front vehicle is no longer able to be recognized, so long as able to recognize road dividing objects or road dividing lines, it is possible to make the vehicle 100 decelerate and hold the vehicle 100 in a stopping state between the left and right road dividing objects or road dividing lines without suspending deceleration stop control.

Note that, by configuring the control device 6 so as to make the vehicle 100 stop along the road dividing objects or road dividing lines at the side near the sidewalk when making the vehicle 100 stop between the pair of left and right road dividing objects or road dividing lines, it is possible to easily and safely provide assistance from the sidewalk side to the driver after making the vehicle 100 stop.

Further, conversely, by configuring the control device 6 so as to make the vehicle 100 stop along the road dividing objects or road dividing lines at the side far from the sidewalk when making the vehicle 100 stop between the pair of left and right road dividing objects or road dividing lines, it is possible to prevent unintended contact with road users on the sidewalks or motorcycles etc. slipping pass the vehicle 100 at the left side of the road.

Further, the control device 6 according to the present embodiment is configured to recognize dividing objects and dividing lines on the road based on images captured by the external cameras 11 (imaging devices) and set the recognition level of the dividing lines of the current running lane and the recognition level of the road dividing objects or road dividing lines based on the results of recognition of the dividing objects and dividing lines.

Above, embodiments of the present disclosure were explained, but the above embodiments only show some of the examples of application of the present disclosure and are not intended to limit the technical scope of the disclosure to the specific constitutions of the embodiments.

For example, in the above embodiments, the computer program run in the control device 6 may also be provided in a form recorded in a computer readable portable recording medium such as a semiconductor memory, magnetic recording medium, or optical recording medium and may also be provided as a computer program product. Further, in the above embodiment, the control device 6 is used to judge whether the driver has fallen into an abnormal state, but another control device may also be used to make this judgment and the result of judgment may be acquired by the control device 6.

## Claims

1. A driver assistance control device (6) for a vehicle (100), the driver assistance control device configured:
so that if it is judged that a driver of the vehicle (100) is in an abnormal state where continued driving of the vehicle (100) would be difficult, it makes the vehicle (100) stop as driver assistance; and
so that at the time of the driver assistance, when the recognition level of dividing lines of the current running lane on which the vehicle (100) is running is less than a predetermined level and the recognition level of a pair of left and right road dividing objects or road dividing lines defining a road with a direction of forward movement on the road the same direction as the vehicle (100) is greater than or equal to the predetermined level, it makes the vehicle (100) stop between the pair of left and right road dividing objects or road dividing lines.

2. The driver assistance control device (6) according to claim 1, configured so that when making the vehicle (100) stop between a pair of left and right road dividing objects or road dividing lines, it makes the vehicle (100) stop along the road dividing object or road dividing line at the side near a sidewalk.

3. The driver assistance control device (6) according to claim 1, configured so that when making the vehicle (100) stop between a pair of left and right road dividing objects or road dividing lines, it makes the vehicle (100) stop along the road dividing object or road dividing line at the side far from a sidewalk.

4. The driver assistance control device (6) according to any one of claims 1 - 3, configured to:
recognize dividing objects and dividing lines on the road based on images captured by an imaging device (11); and
setting a recognition level of dividing lines of the current running lane and a recognition level of the road dividing objects or road dividing lines based on results of recognition of the dividing objects and dividing lines.

5. A driver assistance method performed by a control device (6), the driver assistance method comprising:
performing driver assistance making a vehicle (100) stop if it is judged a driver of the vehicle (100) is in an abnormal state in which continued driving of the vehicle (100) would be difficult; and
making the vehicle (100) stop between a pair of left and right road dividing objects or road dividing lines when, at the time of driver assistance, the recognition level of dividing lines of the current running lane on which the vehicle (100) is running is less than a predetermined level and the recognition level of a pair of left and right road dividing objects or road dividing lines defining a road with a direction of forward movement on the road the same direction as the vehicle (100) is greater than or equal to the predetermined level.

6. A computer program comprising instructions which, when the program is executed by a computer, make the computer perform processing comprising:
performing driver assistance making a vehicle (100) stop if it is judged a driver of the vehicle (100) is in an abnormal state in which continued driving of the vehicle (100) would be difficult; and
making the vehicle (100) stop between a pair of left and right road dividing objects or road dividing lines when, at the time of driver assistance, the recognition level of dividing lines of the current running lane on which the vehicle (100) is running is less than a predetermined level and the recognition level of a pair of left and right road dividing objects or road dividing lines defining a road with a direction of forward movement on the road the same direction as the vehicle (100) is greater than or equal to the predetermined level.
